# EUROPÄISCHE PATENTSCHRIFT

(11) **EP 3 411 177 B1**
(45) Veröffentlichungstag und Bekanntmachung des Hinweises auf die Patenterteilung: **17.06.2020**
(21) Anmeldenummer: 17702845.3
(22) Anmeldetag: 30.01.2017
(51) Int. Cl.: B23K 20/02, B23K 35/28, B23K 20/04, B23K 35/00, H05B 3/30, H05B 3/48, B23K 101/14, B23K 101/18, B23K 101/34, B23K 103/10, B23K 103/20

(54) **VERFAHREN ZUM HERSTELLEN EINES VERBUNDMETALLGEGENSTANDS MIT EINGEBETTETEM HEIZELEMENT UND KÜHLFLUIDKANAL**
METHOD OF PRODUCING A COMPOSITE METAL ARTICLE WITH AN EMBEDDED HEATING ELEMENT AND COOLING FLUID CHANNEL
PROCÉDÉ DE PRODUCTION D'UN OBJET EN MÉTAL COMPOSITE À ÉLÉMENT CHAUFFANT ET CANAL DE LIQUIDE DE REFROIDISSEMENT INTÉGRÉ

(30) Priorität: 05.02.2016 DE 102016102095
(43) Veröffentlichungstag der Anmeldung: 12.12.2018
(73) Patentinhaber: Alinox AG, 8360 Eschlikon (CH)
(72) Erfinder: SPRING, Markus, 8360 Eschlikon (CH)
(74) Vertreter: Schumacher & Willsau
(86) Internationale Anmeldenummer: PCT/EP2017/051955
(87) Internationale Veröffentlichungsnummer: WO 2017/134017

(56) Entgegenhaltungen:
- WO-A1-2012/022671
- DE-A1-102004 004 424
- US-A- 6 147 334

## Beschreibung

Die Erfindung betrifft ein Verfahren zum Herstellen eines Verbundmetallgegenstands aus einer wenigstens zweilagigen Kernschicht aus Aluminium oder einer Aluminiumlegierung und zwei Deckschichten aus Metall durch
a) Anordnen von wenigstens einem Heizelement zwischen einer ersten und einer zweiten Kernschichtlage,
b) Wärmevorbehandeln der Kernschichtlagen und der Deckschichten bei einer Temperatur, die über der Rekristallisationstemperatur des Aluminiums oder der Aluminiumlegierung, aber unterhalb des Schmelzpunktes des Aluminiums ist,
c) anschließend Zusammenpressen der Kernschichtlagen und der Deckschichten durch Walzen, um das oder jedes Heizelement in die beiden Kernschichtlagen einzubetten und eine Dickenreduktion wenigstens der Kernschichtlagen zu bewirken, wobei zumindest die Deckschichten und die Kernschichtlagen im Bereich ihrer miteinander in Berührung kommenden Seiten eine gegenseitige Diffusionsverbindung eingehen und dadurch stoffschlüssig zu dem herzustellenden Verbundmetallgegenstand miteinander verbunden werden.

Ein Verfahren dieser Art ist aus dem Dokument WO 2012/022671 (siehe auch das entsprechende Patent EP 2 525 938 B1) bekannt. Durch dieses Verfahren soll eine Metallplatte mit einer insgesamt besseren Wärmeleitfähigkeit und einem breiteren Anwendungsspektrum geschaffen werden. Bei dem bekannten Verfahren wird dabei von dem grundlegenden US-Patent Nr. 2 718 690 A von John B. Ulam aus dem Jahre 1955 ausgegangen, das seinerseits auf den richtungweisenden US-Patenten Nr. 1 392 416 A und 2 468 206 A aus den Jahren 1921 beziehungsweise 1949 aufbaut. Bei diesem bekannten Verfahren werden die Molekularstrukturen von Metallen miteinander vereinigt. Die Metalle, bei denen die molekulare Gitterstruktur freigelegt worden ist, werden auf die geeignete Temperatur erhitzt, damit durch Druckbeaufschlagung die benachbarten Oberflächen der Metalle ineinander diffundieren können. Bei dem bekannten Verfahren der eingangs genannten Art wird davon vorteilhafter Gebrauch gemacht, um ein Heizelement in eine Metallplatte, die nicht mit Ausnehmungen versehen ist, einzubetten und das Vorhandensein jeglichen Luftspalts in der fertigen Metallplatte zu verhindern. Wenn eine Reihe von gesonderten Heizelementen in die Plattenkörper eingebettet wird, lassen sich lange Metallplatten mit einer Vielzahl von hintereinander angeordneten gesonderten Heizelementen oder mit einem über der Länge der Metallplatte durchgehenden Heizelement in einem kontinuierlichen Walzverfahren herstellen. Die durch das bekannte Verfahren hergestellte Metallplatte wird als Heizplatte eingesetzt. Der Einsatz dieser bekannten Metallplatte zusätzlich oder alternativ als Kühlplatte ist nicht vorgesehen und wäre auch nicht ohne weiteres möglich. Bei dem Einsatz als Heiz- und Kühlplatte müsste die bekannte Metallplatte nämlich einen Kanal für Kühlfluid aufweisen, der aber nicht vorgesehen ist. Das in die bekannte Metallplatte eingebettete Heizelement ist ein Rohrheizkörper, in dessen Rohr ein oder zwei Heizdrähte mittig eingebettet sind.

Aus dem Dokument DE 10 2007 054 071 B4 sind ein Verbundmetallgegenstand und ein Verfahren zur Herstellung eines Verbundmetallgegenstands bekannt. Der bekannte Verbundmetallgegenstand ist im Grundriss von streifenförmigen Kanälen durchsetzt. Er besteht aus einzelnen Metallschichten, die an ihren Grenzflächen in ihrer Molekularstruktur jeweils durch eine Diffusionsverbindung vereinigt sind. Die Kanäle können zwar zum Hindurchleiten von Heiz- und/oder Kühlfluid benutzt werden, in dem Dokument ist jedoch keine Anordnung von Kanälen gezeigt, die zum Hindurchleiten von Heiz- und Kühlfluid benutzt werden könnte. Bei der bekannten Metallplatte lassen sich zwar die Kanäle mit Rohrkörpern auskleiden, das ergibt jedoch auch keine Anordnung von Kanälen, mit der sich Kühl- und Heizfluid durch die Kanäle hindurchleiten ließe. In die Kanäle oder in den rohrförmigen Körper wird bei dem bekannten Verbundmetallgegenstand ein weiterer Körper eingeführt, bei dem es sich um einen Temperatursensor, insbesondere RFID-Chip, ein Piezo-Chip od. dgl. intelligenten Chip oder ein Peltier-Element handelt.

Es ist ein Verbundmetallgegenstand aus einem Firmenprospekt der Anmelderin mit dem Titel ACTIVE FROM THE CORE aus dem Jahre 2013 bekannt. Dieser Verbundmetallgegenstand ist aus einer Kernschicht und zwei Deckschichten aufgebaut, die gegenseitig eine Diffusionsverbindung haben, und aus wenigstens einem in der Kernschicht ausgebildeten Kanal für Kühlfluid sowie wenigstens einem in die Kernschicht eingebetteten Heizelement. Über die Art der Herstellung dieses Verbundmetallgegenstands finden sich in dem Prospekt keine Angaben. Es findet sich lediglich die Angabe SWISS PLY, unter der die Anmelderin ein Metallplattierverfahren versteht, bei dem wenigstens zwei Metallschichten diffusionsverbunden werden. Die Diffusionsverbindung entspricht der, die aus den oben aufgeführten Dokumenten EP 2 525 938 B1 und DE 10 2007 054 071 B4 bekannt sind. Der Prospekt zeigt den Aufbau einer Heiz- und Kühlplatte aus einer Kernschicht und zwei Deckschichten. In die Kernschicht sind Heizdrähte und außerdem Kanäle für Kühlfluid eingebettet. Die in dem Prospekt dargestellte Heiz- und Kühlplatte hat bezüglich der Heizdrähte, die in die Kernschicht eingebettet sind, und bezüglich der Deckschichten einen Aufbau, wie er aus dem oben erwähnten Dokument EP 2 525 938 B1, insbesondere Figur 2, bekannt ist. Die Art der Herstellung der Kernschicht mit eingebetteten Heizdrähten erfordert, dass die Kernschicht aus zwei Kernschichtlagen hergestellt wird, die miteinander und mit den Deckschichten diffusionsverbunden werden. Die Lage der Kanäle, die sich in derselben Ebene wie die Heizdrähte erstrecken, lässt auf zwei Möglichkeiten der Herstellung der Kernschicht schließen. Die eine Möglichkeit würde beinhalten, dass die Kernschichtkanäle vor dem Walzen hälftig in die beiden Kernschichtlagen eingebettet und bei dem Walzen dann zu den in dem Prospekt sichtbaren Kanälen vereinigt werden. Dabei würden die Kanäle in ihrer endgültigen Form gleichzeitig mit dem Einbetten der Heizdrähte in die Kernschichtlagen hergestellt. Die andere Möglichkeit bestünde darin, in zwei Kernschichtlagen, die keine Kühlkanäle oder Teile von Kühlkanälen aufweisen, auf die bekannte Weise Heizdrähte einzubetten, dann die Kernschichtlagen diffusionszuverbinden und anschließend die Kühlkanäle in die Kernschicht einzuarbeiten. Erst danach könnte die Kernschicht zusammen mit den Deckschichten gewalzt und so diffusionsverbunden werden. Die Fertigung dieser bekannten Heiz- und Kühlplatte ist also in jedem Fall relativ kompliziert.

Darüber hinaus sind bei der bekannten Heiz- und Kühlplatte die Heizdrähte und die Kühlkanäle in derselben Ebene angeordnet, das heißt sie teilen sich gemeinsam ein und dieselbe Mittelebene. Das hat zur Folge, dass die Wahl der Lage von Heizdrähten und Kühlkanälen bei der bekannten Platte eingeschränkt ist. Dort, wo Heizdrähte angeordnet sind, können nicht Kanäle angeordnet werden, und umgekehrt. Darüber hinaus beschränkt sich die Form von Heizdrähten und Kanälen auf eine im Wesentlichen langgestreckte Form, die nicht die optimale Form von Heizdrähten und Kanälen darstellt. Die Freiheit in der Wahl der geometrischen Anordnungen und Formen von Heizdrähten und Kanälen ist auch sehr eingeschränkt.

Das Dokument US 6,147,334 A offenbart einen Gegenstand mit einem Heizelement und einem Kühlelement, wobei diese in gegenüberliegende Seiten eines Kernes integriert sind. Die ganze Verbindung des Heizelements und des Kühlelements wird durch isostatische Heißpressung hergestellt, ohne dabei als Kern mehrere überlagerte Schichten zu verwenden.

Das Dokument DE 10 2004 004 424 A1 offenbart die Integration von Kühlkanälen in einem Verbundgegenstand, aber ohne ein Heizelement.

Das Verfahren nach der Erfindung erlaubt eine einfache Herstellung eines solchen Verbundmetallgegenstands, mit mehr Freiheit für die relative Anordnung des Heizelementes und eines Kühlkanals.

Die mit der vorliegenden Erfindung zu lösende Aufgabe ist somit darin zu sehen, ein Verfahren zum Herstellen eines Verbundmetallgegenstandes weiter zu verbessern und zu vereinfachen.

Das Verfahren nach der Erfindung macht die Fertigung technisch einfacher, weil alle Schichten gemeinsam gewalzt werden können. In der Auslegung der optimalen Formen von Heizelement und Kanälen gibt es keine Überschneidungen oder gegenseitigen Behinderungen. Die Erfindung ermöglicht somit nicht nur eine größere Freiheit in der Wahl der geometrischen Anordnung und Formen von Heizelement und Kanälen. Darüber hinaus ermöglicht die Erfindung eine extrem flache Bauweise des Verbundmetallgegenstands. Ermöglicht werden diese Vorteile hauptsächlich dadurch, dass bei dem durch das Verfahren nach der Erfindung herzustellenden Verbundmetallgegenstand das Heizelement und der Kanal in unterschiedlichen Ebenen liegen, so dass sie sich nicht gegenseitig kreuzen oder behindern können. Die Deckschichten bestehen bevorzugt aus Stahl oder rostfreiem Stahl.

Vorteilhafte Ausgestaltungen des Verfahrens nach der Erfindung bilden die Gegenstände der abhängigen Ansprüche.

In einer Ausgestaltung des Verfahrens nach der Erfindung wird, wenn im Grundriss des Verbundmetallgegenstands Kreuzungspunkte zwischen dem Heizelement und dem Kanal entstehen, die zweite Kernschichtlage, die der dritten Kernschichtlage benachbart ist, vorab im Bereich des Kanals ausgespart. Dadurch wird verhindert, dass durch das Heizelement Schichtmaterial in den Kanal hinein verdrängt und dessen Querschnitt dadurch verkleinert wird.

In einer weiteren Ausgestaltung des Verfahrens nach der Erfindung wird ein Heizelement eingesetzt, dessen Dicke oder Durchmesser gleich einer gemeinsamen Dicke der ersten und der zweiten Kernschichtlage nach erfolgter Dickenreduktion ist. Dadurch wird der Raum, der für das Heizelement in der ersten und der zweiten Kernschichtlage maximal verfügbar ist, voll ausgenützt.

In einer weiteren Ausgestaltung des Verfahrens nach der Erfindung hat die dritte Kernschichtlage eine Dicke, die vor und nach der Dickenreduktion gleich der jeweiligen gemeinsamen Dicke der ersten und der zweiten Kernschichtlage ist. Das bedeutet, dass sich das Heizelement und der Kanal jeweils bis zu einer Mittelebene des Verbundmetallgegenstands erstrecken und dass so der zwischen den Deckschichten für den Kanal maximal verfügbare Raum durch den Kanal voll ausgenützt wird.

In einer weiteren Ausgestaltung des Verfahrens nach der Erfindung wird als Kanal in der dritten Kernschichtlage ein Kanal eingesetzt, der die dritte Kernschichtlage auf ihrer gesamten Dicke durchsetzt. Das ist nicht notwendig, aber vorteilhaft, denn es vereinfacht die Fertigung und ermöglicht eine optimale Kühlung des Verbundmetallgegenstands mittels Kühlfluid, das in dem Kanal strömt.

In einer weiteren Ausgestaltung des Verfahrens nach der Erfindung werden die drei Kernschichtlagen einem Walzenspalt jeweils in einem spitzen Winkel zueinander zugeführt. Das erleichtert das Ausrichten der Schichten und Schichtlagen des Verbundmetallgegenstands in Bezug aufeinander und des Heizelements und des Kanals in Bezug aufeinander.

In einer weiteren Ausgestaltung des Verfahrens nach der Erfindung werden die drei Kernschichtlagen einem Walzenspalt jeweils im Wesentlichen parallel zueinander zugeführt. Das erschwert zwar die Kontrolle der Lage des Heizelements in Bezug auf den Kanal, spart jedoch an Raum, der für den Walzvorgang vorderhalb des Walzenspalts verfügbar sein muss.

In einer weiteren Ausgestaltung des Verfahrens nach der Erfindung wird das Walzen in zwei Schritten ausgeführt, wobei in dem ersten Schritt insgesamt eine Dickenreduktion aller Kernschichtlagen von bis zu 5 Prozent und in dem zweiten Schritt eine zusätzliche Dickenreduktion aller Kernschichtlagen von bis zu 20 Prozent erzeugt wird. Die geringe Dickenreduktion in dem ersten Schritt erlaubt, die Deckschichten und die Kernschichtlagen ohne aufwändige zusätzliche Maßnahmen aufeinander ausgerichtet zu halten und doch so weit diffusionszuverbinden, dass diese am Ende des ersten Schrittes in ihrer gegenseitigen Lage fixiert sind, so dass in dem zweiten Schritt mit einer wesentlich höheren Dickenreduktion das Diffusionsverbinden abgeschlossen und der Verbundmetallgegenstand auf die Nenndicke gebracht werden kann, die er im fertigen Zustand haben soll.

In einer weiteren Ausgestaltung des Verfahrens nach der Erfindung erfährt in dem Schritt b) das Heizelement dieselbe Wärmevorbehandlung wie die Kernschichtlagen und die Deckschichten. Es ist so möglich, die erste und die zweite Kernschichtlage auch an den Berührungsstellen zwischen sich und dem Heizelement mit einem rohrförmigen Mantel des Heizelements stoffschlüssig zu verbinden. Dadurch lässt sich der Wärmeübergang zwischen dem Heizelement und den das Heizelement umschließenden beiden Kernschichtlagen noch optimieren. Zu diesem Zweck kann das Heizelement ein Rohrheizkörper sein, bei dem ein Heizdraht in einem metallischen Rohr angeordnet und von dem Rohr durch einen wärmefesten, elektrisch isolierenden Abstandshalter getrennt ist. Es braucht also lediglich für das Rohr ein Metall gewählt zu werden, das mit dem Aluminium oder der Aluminiumlegierung der beiden Kernschichtlagen diffusionsverbindbar ist. Ein dafür geeignetes Metall ist Aluminium, eine Aluminiumlegierung, Kupfer, Titan, Stahl oder rostfreier Stahl.

Bei dem Verfahren nach der Erfindung werden bei der Wärmevorbehandlung die Kernschichtlagen zwar auf eine Temperatur oberhalb der Rekristallisationstemperatur von Aluminium erhitzt, diese Temperatur liegt aber unterhalb des Schmelzpunktes von Aluminium und unterhalb der Rekristallisationstemperatur des Metalls, aus dem die Deckschichten bestehen. Bevorzugt bildet Stahl oder rostfreier Stahl das Metall, das für die Deckschichten verwendet wird. Es gibt aber Fälle, in denen sich besondere Vorteile erzielen lassen, wenn statt Stahl oder rostfreier Stahl Kupfer, Titan, Reinaluminium oder eine Aluminiumlegierung bei den Deckschichten des durch das Verfahren nach der Erfindung hergestellten Verbundmetallgegenstands zum Einsatz kommt.

Ausführungsbeispiele der Erfindung werden im Folgenden mit Bezugnahme auf die Zeichnungen näher beschrieben.

Es zeigen:
- Figur 1: eine Schnittdarstellung eines Walzprozesses bei einem Ausführungsbeispiel des Verfahrens nach der Erfindung, bei dem drei Kernschichtlagen und zwei Deckschichten einem Walzenspalt jeweils in einem spitzen Winkel zueinander zugeführt werden, ohne dass Kreuzungspunkte zwischen einem Heizelement und einem Kanal vorhanden wären,
- Figur 2: eine Schnittdarstellung eines Walzprozesses bei einem weiteren Ausführungsbeispiel des Verfahrens nach der Erfindung, bei dem drei Kernschichtlagen und zwei Deckschichten einem Walzenspalt jeweils im Wesentlichen parallel zueinander zugeführt werden, wobei auch ein Kreuzungspunkt zwischen einem Heizelement und einem Kanal gezeigt ist,
- Figur 3: ein erstes Beispiel eines durch das Verfahren nach der Erfindung hergestellten Verbundmetallgegenstands,
- Figur 4: eine Längsschnittansicht des Verbundmetallgegenstands nach Fig. 3 nach der Linie IV - IV in Fig.3,
- Figur 5: in vergrößertem Maßstab eine Einzelheit X1 der Längsschnittansicht nach Fig. 4,
- Figur 6: ein weiteres Beispiel des durch das Verfahren nach der Erfindung hergestellten Verbundmetallgegenstands, von dem in Fig. 6 nach Ausführung des Walzvorganges zwei Exemplare in Walzrichtung hintereinander angeordnet und im Grundriss dargestellt sind,
- Figur 7: eine Längsschnittansicht nach der Linie VII - VII in Fig. 6,
- Figur 8: in vergrößertem Maßstab eine Einzelheit X2 der Längsschnittansicht nach Fig. 7 und
- Figur 9: in einer vereinfachten Darstellung ein weiteres Beispiel des durch das Verfahren nach der Erfindung hergestellten Verbundmetallgegenstands, bei dem ein Kanal und ein Heizelement jeweils die Form einer Welle oder eines Mäanders haben und keine gegenseitigen Kreuzungspunkte aufweisen.

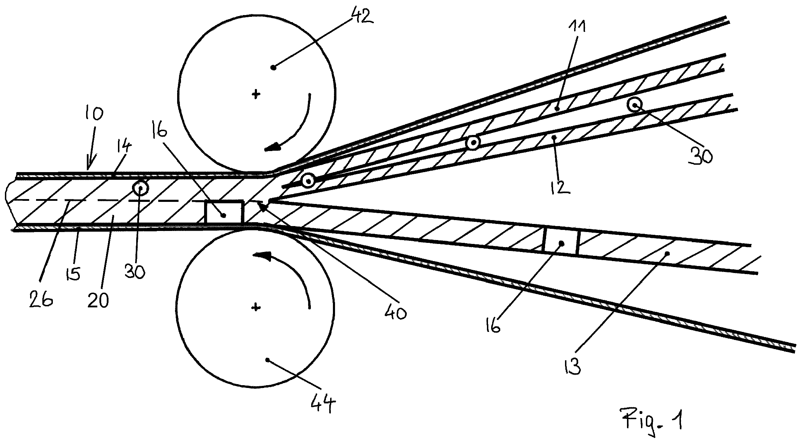

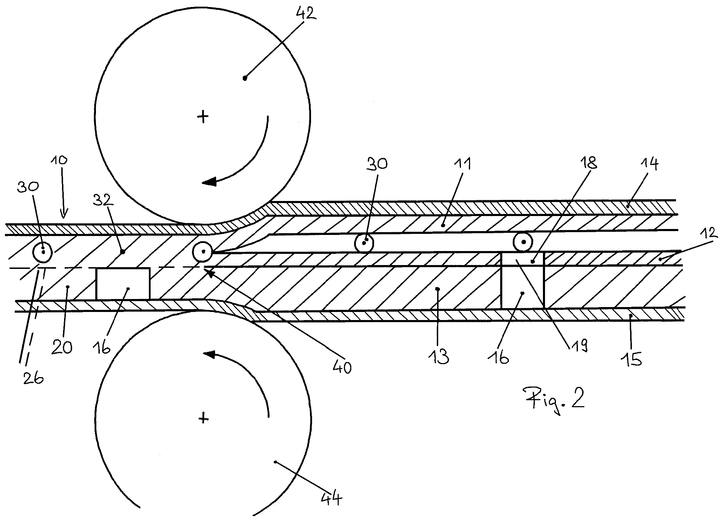

Fig. 1 zeigt in einer Schnittdarstellung, wie eine erste Ausführungsform eines insgesamt mit 10 bezeichneten Verbundmetallgegenstands, der eine Kernschicht 20 und zwei Deckschichten 14 und 15 aufweist, gewalzt wird. Die Kernschicht 20 entsteht aus einer ersten Kernschichtlage 11, einer zweiten Kernschichtlage 12 und einer dritten Kernschichtlage 13, die gemeinsam mit den Deckschichten 14 und 15 unter Einbettung eines Heizelements 30 in die Kernschichtlagen 11 und 12 gewalzt werden. Die bei der Herstellung des Verbundmetallgegenstands 10 auszuführenden Verfahrensschritte, die mit denen übereinstimmen, welche in den eingangs erwähnten US-Dokumenten und dem Dokument EP 2 525 938 B1 beschrieben sind, wie Reinigen der Metalloberflächen, Wärmevorbehandeln der zu walzenden Schichten und Schichtlagen und Walzen derselben in dem erwärmten Zustand zur Erzielung einer gegenseitigen Diffusionsverbindung, werden hier zwar angegeben, aber, da bekannt, nicht im Einzelnen näher beschrieben. Zusätzlich zu dem Heizelement 30 könnte in die Kernschicht 20 ein Temperatursensor (in Fig. 2 gezeigt und mit 32 bezeichnet) eingebettet werden.

Gemäß der Darstellung in Fig. 1 geschieht das Walzen in einem Walzenspalt 40 zwischen zwei Walzen 42 und 44 eines Walzwerks, das nicht weiter ins Einzelne gehend dargestellt zu werden braucht. Bevor die Kernschichtlagen 11, 12 und 13 und die Deckschichten 14 und 15 dem Walzenspalt 40 zugeführt werden, und nachdem das Heizelement 30 zwischen der ersten Kernschichtlage 11 und der zweiten Kernschichtlage 12 angeordnet worden ist, werden die Kernschichtlagen 11, 12 und 13 und die Deckschichten 14 und 15 bei einer Temperatur, die über der Rekristallisationstemperatur des Aluminiums oder der Aluminiumlegierung, aus dem oder aus der die Kernschicht 20 besteht, aber unterhalb des Schmelzpunktes des Aluminiums oder der Aluminiumlegierung ist, wärmevorbehandelt. In der dritten Kernschichtlage 13 ist ein Kanal 16 für Kühlfluid ausgespart. Durch den Walzprozess werden alle Kernschichtlagen 11, 12 und 13 und die beiden Deckschichten 14 und 15 im Bereich ihrer miteinander in Berührung kommenden Seiten gegenseitig diffusionsverbunden.

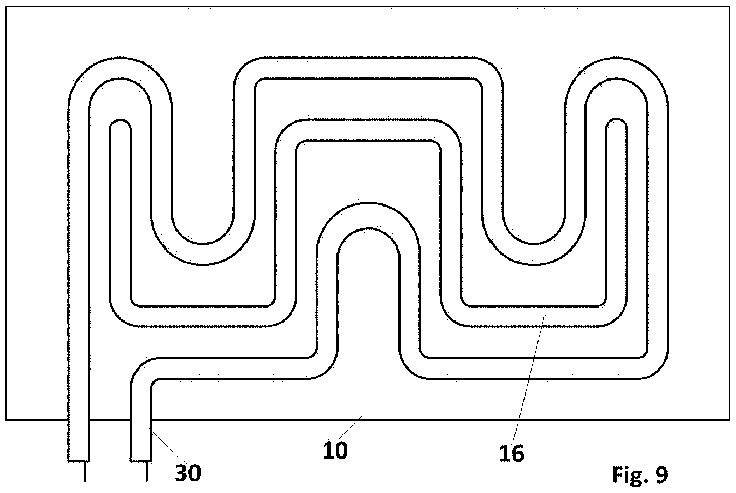

Bei dem in Fig. 1 dargestellten ersten Ausführungsbeispiel des Verfahrens nach der Erfindung werden die drei Kernschichtlagen 11, 12 und 13 und die beiden Deckschichten 14 und 15 dem Walzenspalt 40 jeweils in einem spitzen Winkel zueinander zugeführt. Bei dem Ausführungsbeispiel des Verfahrens nach Fig. 1 kommt der Kanal 16 jeweils zwischen zwei Windungen oder Strängen des Heizelements 30 zu liegen. In diesem Fall sind keine Kreuzungspunkte zwischen dem Kanal 16 und dem Heizelement 30 vorhanden. Die kreuzungsfreie Verlegung von Heizelement und Kanal wird weiter unten mit Bezug auf Fig. 9 näher beschrieben.

Wenn die Deckschichten 14, 15, die beiden Kernschichtlagen 11, 12 und die Kernschichtlage 13 den Walzenspalt 40 durchlaufen, erfolgt eine Dickenreduktion wenigstens der drei Kernschichtlagen. Bevorzugt erfolgt das Walzen und damit diese Dickenreduktion in zwei Schritten, wobei in dem ersten Schritt insgesamt eine Dickenreduktion von bis zu 5 Prozent und in dem zweiten Schritt eine zusätzliche Dickenreduktion von bis zu 20 Prozent erzeugt wird. Für den zweiten Schritt kann der Verbundmetallgegenstand 10 durch einen anderen Walzenspalt oder noch einmal durch den Walzenspalt 40 hindurchgeführt werden, wobei in letzterem Fall der Walzenspalt entsprechend der gewünschten Dickenreduktion kleiner eingestellt wird.

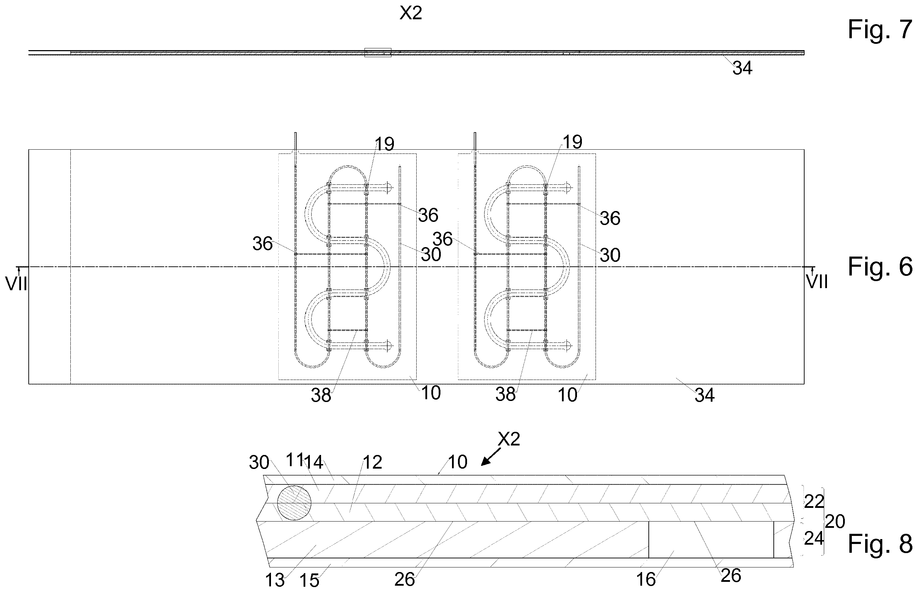

Eingangs ist bereits erwähnt worden, dass in dem ersten Schritt die Dickenreduktion nur so weit führt, dass die beiden Deckschichten und die drei Kernschichtlagen gerade miteinander diffusionsverbunden werden, unter gleichzeitiger und wenigstens teilweiser Einbettung des Heizelements 30 in die erste und die zweite Kernschichtlage 11, 12, so dass sich ihre gegenseitige Lage während der Ausführung des zweiten Walzschrittes nicht mehr verändert. Als das Heizelement 30 wird ein Heizelement eingesetzt, dessen Dicke oder Durchmesser gleich einer gemeinsamen Dicke der ersten und der zweiten Kernschichtlage 11, 12 nach der in dem zweiten Walzschritt erfolgten Dickenreduktion ist. Diese Bemessung und diese Lage des Heizelements 30 sind aus Fig. 8 ersichtlich, auf die weiter unten noch weiter eingegangen wird.

Weiter hat bei dem fertigen Verbundmetallgegenstand 10 die dritte Kernschichtlage 13 eine Dicke, die vor und nach der Dickenreduktion gleich der jeweiligen gemeinsamen Dicke der ersten und der zweiten Kernschichtlage 11, 12 ist. Deshalb enthält der fertige Verbundmetallgegenstand 10 zwischen den Deckschichten 14 und 15, bei denen es sich insbesondere jeweils um ein Stahl- oder Edelstahlblech handelt, eine Aluminiumheizplatte 22, die aus der ersten und der zweiten Kernschichtlage 11, 12 und dem darin eingebetteten Heizelement 30 gebildet ist, bei dem es sich vorzugsweise um einen Rohrheizkörper mit darin eingebettetem Heizdraht handelt, und eine durch die dritte Kernschichtlage 13 gebildete Aluminiumkühlplatte 24. Letztere wird mittels Kühlfluid gekühlt, das durch den Kanal 16 hindurchgeleitet wird. Dadurch, dass die Aluminiumheizplatte 22 und die Aluminiumkühlplatte 24 die gleiche Dicke haben, teilen sie sich eine gemeinsame Mittelebene 26 des Verbundmetallgegenstands 10, in der sie miteinander diffusionsverbunden sind. Die gemeinsame Mittelebene 26 ist in Fig. 1 gestrichelt angedeutet und in Fig. 8 mit ausgezogener Linie dargestellt. Mit dem Heizelement 30, das gemäß der Darstellung in Fig. 8 einen Durchmesser hat, der gleich der Dicke der Aluminiumheizplatte 22 ist, lässt sich das konstruktionsbedingt mögliche Heizvermögen der Aluminiumheizplatte 22 voll ausnutzen. Entsprechendes gilt für den Kanal 16 und die Aluminiumkühlplatte 24.

Es spräche aber nichts dagegen, den Durchmesser des Heizelements 30 etwas kleiner als die Dicke der Aluminiumheizplatte 22 zu wählen. Dieser Fall ist in Fig. 1 dargestellt. Die Deckschichten 14 und 15 könnten statt aus Stahl oder rostfreiem Stahl aus Kupfer oder Titan oder aus Aluminium oder einer Aluminiumlegierung bestehen.

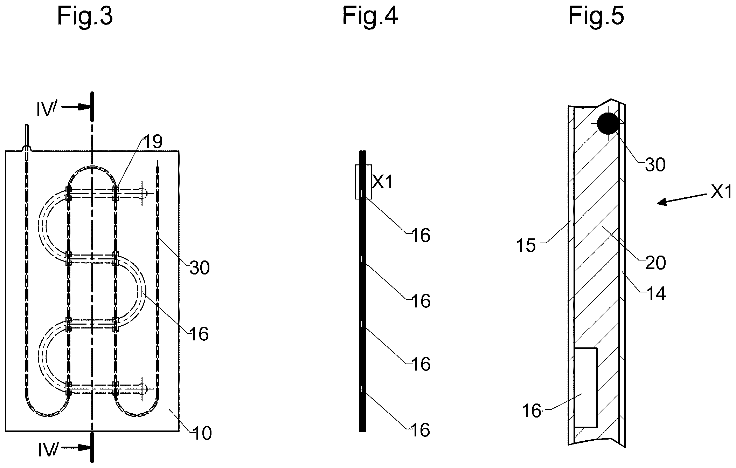

Fig. 2 zeigt in einer gleichen Ansicht wie in Fig. 1 das Walzen eines Verbundmetallgegenstands 10, bei dem aber die beiden Deckschichten 14, 15 und die drei Kernschichtlagen 11, 12 und 13 dem Walzenspalt 40 zwischen den Walzen 42 und 44 jeweils im Wesentlichen parallel zueinander zugeführt werden. Darüber hinaus ist bei dem in Fig. 2 dargestellten Ausführungsbeispiel zwischen dem Heizelement 30 und einem Kanal 16 ein Kreuzungspunkt 19 vorhanden. Es handelt sich dabei um den in Fig. 8 rechts dargestellten Kanal 16. In dem Kreuzungspunkt 19 ist die zweite Kernschichtlage 12 mit einer Aussparung 18 versehen, die in einer in Fig. 8 dargestellten Einzelheit X2 allerdings nicht sichtbar ist. Die Grundrissform der Aussparung 18 ist in Fig. 3 zu erkennen. Die Aussparung 18 wird zweckmäßig vorab hergestellt, also bevor die zweite Kernschichtlage 12 zum Einsatz kommt und gemeinsam mit den übrigen Kernschichtlagen 11, 13 und den Deckschichten 14, 15 wärmevorbehandelt wird. Die Aussparung 18 gewährleistet, dass das Heizelement 30 in dem Kreuzungspunkt 19 in die erste und die zweite Kernschichtlage 11, 12 eingebettet werden kann, ohne dass das Heizelement 30 dabei Material der zweiten Kernschichtlage 12 in den Kanal 16 hinein verdrängt, während es in die erste und die zweite Kernschichtlage 11, 12 eingebettet wird.

In Fig. 2 sind zwar die drei Kernschichtlagen 11, 12 und 13 unterschiedlich schraffiert dargestellt, um sie besser voneinander unterscheidbar zu machen, bei dem fertigen Verbundmetallgegenstand 10, der sich in der Darstellung in Fig. 2 ab dem Walzenspalt 40 nach links erstreckt, sind die einzelnen Kernschichtlagen 11, 12 und 13 mit unbewaffnetem Auge aber nicht voneinander zu unterscheiden, da sie aus dem gleichen Metall bestehen und bei dem fertigen Verbundmetallgegenstand die erste Kernschichtlage 11 mit der zweiten Kernschichtlage 12 und außerdem die zweite Kernschichtlage 12 mit der dritten Kernschichtlage 13 jeweils diffusionsverbunden ist. Die Mittelebene 26 ist ebenso wie in Fig. 1 lediglich zu Erläuterungszwecken gestrichelt angedeutet. Die einzelnen Metallschichten, die durch die drei Kernschichtlagen 11, 12, 13 gebildet sind, sind an ihren Grenzflächen in ihrer Molekularstruktur durch eine Diffusionsverbindung vereinigt. In dem fertigen Verbundmetallgegenstand 10 verhält sich deshalb die Kernschicht 20 wie das bloße Metall und weist auch dessen Festigkeit auf. In Fig. 2 ist ein zusätzlich in die Kernschicht eingebetteter Temperatursensor 32 zu erkennen, der wie das Heizelement 30 bei dem Walzen in die erste und die zweite Kernschichtlage 11, 12 eingebettet worden ist. Mit Hilfe des in den Verbundmetallgegenstand 10 integrierten Temperatursensors 32, dessen Anzahl in dem Verbundmetallgegenstand 10 beliebig ist, lässt sich im Betrieb die Temperatur regeln, wenn der Verbundmetallgegenstand zu einem Grill- oder Kochgerät verarbeitet worden ist.

Die vorstehende Beschreibung hat sich auf das Verfahren beschränkt, durch welches die Deckschichten und die Kernschichtlagen zu dem fertigen Verbundmetallgegenstand 10 gewalzt werden, der in den Figuren 1 und 2 links von dem Walzenspalt gebildet wird. Die weitere Beschreibung befasst sich daher noch etwas näher mit dem fertigen Verbundmetallgegenstand 10, wie er links vom dem Walzenspalt 40 vorhanden ist. Dazu wird nun auf die Figuren 3 bis 7 und zusätzlich nochmals auf die Figuren 8 und 9 Bezug genommen.

Fig. 3 zeigt im Grundriss ein erstes Beispiel des fertigen Verbundmetallgegenstands 10, bei dem es sich um eine Metallplatte mit dem eingebetteten Heizelement 30 und dem eingebetteten Kanal 16 für Kühlfluid handelt. Fig. 4 zeigt den Verbundmetallgegenstand 10 in einer Längsschnittansicht nach der Linie IV - IV in Fig. 3. Fig. 5 zeigt eine vergrößerte Darstellung einer in Fig. 4 mit X1 bezeichneten Einzelheit.

In der vergrößerten Darstellung in Fig. 5 sind die Deckschichten 14 und 15, die Kernschicht 20, der Kanal 16 und das Heizelement 30 deutlich zu erkennen. Die Darstellung in Fig. 3 zeigt ein Beispiel des Verbundmetallgegenstands 10, in dem das Heizelement 30 und der Kanal 16 so angeordnet und geformt sind, dass sie sich im Grundriss des Verbundmetallgegenstands 10 in einigen Punkten 19 kreuzen. Ein solcher Kreuzungspunkt 19 befindet sich in der Darstellung in Fig. 2 an der Stelle, an der sich die Aussparung 18 befindet. In Fig. 3 sind acht derartige Kreuzungspunkte 19 vorhanden. In der Längsschnittansicht in Fig. 5 ist der Kreuzungspunkt 19 aufgrund der gewählten Schnittansicht nach der Linie IV - IV nicht sichtbar. Eine nach Fig. 2 in jedem derartigen Kreuzungspunkt 19 vorhandene Aussparung 18 in der zweiten Kernschichtlage 12 verhindert, dass bei der durch das Walzen bewirkten Dickenreduzierung das Heizelement 30 bei seiner Einbettung in die erste und die zweite Kernschichtlage 11, 12 Material der zweiten Kernschichtlage 12 in den Kanal 16 hinein verdrängt, wie oben bereits erläutert. Schließlich ist in Fig. 5 auch deutlich zu erkennen, dass bezüglich einer gedachten Mittelebene der Kernschicht 20 der Kanal 16 auf einer Seite der Mittelebene und das Heizelement 30 auf der anderen Seite der Mittelebene in der Kernschicht liegt. Diese Mittelebene ist in den Figuren 1 und 2 jeweils mit 26 bezeichnet. In Fig. 5 liegen, mit anderen Worten, der Kanal 16 und das Heizelement 30 in der Kernschicht 20 in unterschiedlichen Ebenen. Das vereinfacht die Fertigung des Verbundmetallgegenstands 10, außerdem gibt es keine Überschneidungen oder Behinderungen in der Auslegung der optimalen Formen von Heizelement 30 und Kanal 16. Ferner bietet sich so die Möglichkeit, das Heizelement 30 und den Kanal 16 in dem Verbundmetallgegenstand 10 so anzuordnen und zu formen, dass sie sich entweder in dem Grundriss des Verbundmetallgegenstands nicht kreuzen oder dass sie sich in dem Grundriss des Verbundmetallgegenstands wie in Fig. 3 wenigstens in einigen Punkten 19 kreuzen.

Die Figuren 6 bis 8 zeigen, dass mehrere fertige Verbundmetallgegenstände 10 in einem Metallband 34 fertig gewalzt werden können, um danach auf ihre Nenngröße zugeschnitten zu werden. Eine in Fig. 7 mit X2 bezeichnete Einzelheit eines Metallbandes 34 ist vergrößert in Fig. 8 dargestellt. Der Aufbau nach Fig. 8 ist weiter oben bereits im Einzelnen beschrieben worden. Die Verbundmetallgegenstände 10 in der Darstellung in Fig. 6 entsprechen in ihrer Ausbildung jeweils im Wesentlichen der Ausbildung des Verbundmetallgegenstands 10 nach Fig. 3. In der Darstellung in Fig. 6 sind zusätzlich bei jedem Verbundmetallgegenstand 10 zwei obere Haltekämme 36 und ein unterer Haltekamm 38 gezeigt, die das in Form einer Welle ausgebildete Heizelement 30 in seiner Lage und Formgebung fixieren. Das Heizelement 30 und der Kanal 16 haben in der Darstellung in den Figuren 3 und 6 jeweils die Form einer Welle, könnten stattdessen aber auch die Form eines Mäanders nach Fig. 9 haben. Die Wellen oder Mäander sind in unterschiedlichen Ebenen angeordnet und dort so angeordnet, dass sie sich bei den Beispielen die in den Figuren 3 und 6 gezeigt sind, im Grundriss des Verbundmetallgegenstands 10 kreuzen.

Fig. 9 zeigt ein Beispiel des Verbundmetallgegenstands 10, bei dem das Heizelement 30 und der Kanal 16 jeweils die Form einer Welle oder eines Mäanders haben, wobei die Wellen oder Mäander in unterschiedlichen Ebenen angeordnet und dort so ausgerichtet sind, dass sie sich im Grundriss des Verbundmetallgegenstands 10 in parallelen, gegenseitig beabstandeten Windungen erstrecken und sich nicht kreuzen.

Die Figuren 6 und 7 zeigen zwei Verbundmetallgegenstände 10, nachdem der Walzvorgang stattgefunden hat. Das Metallband 34 besteht aus den beiden Deckschichten 14 und 15. Vor dem Walzen sind in das Metallband 34, also zwischen die Deckschichten 14 und 15 zwei zugeschnittene Platten eingelegt worden, die jeweils aus den drei Kernschichtlagen 11, 12 und 13 bestehen, aber noch nicht miteinander verbunden sind. Zwischen die beiden Kernschichtlagen 11 und 12 dieser Platten ist jeweils das Heizelement 30 eingelegt worden. Diese Platten sind Ausgangsmetallgebilde, welche durch das Walzen jeweils in einen Verbundmetallgegenstand 10 umgeformt werden. Unmittelbar nach dem Walzvorgang sind die Verbundmetallgegenstände 10 noch mit dem Metallband 34 verbunden. Durch anschließendes Zuschneiden erhalten die Verbundmetallgegenstände 10 dann die äußere Form, die in Figur 6 gezeigt ist.

Wenn das Heizelement 30 ein Rohrheizkörper ist, wie er oben mit Bezug auf das Dokument EP 2 525 938 B1 bereits erwähnt worden ist (dort im Querschnitt gezeigt in den Figuren 5 und 7), und wenn das Rohr des Rohrheizkörpers aus einem Metall wie Stahl, rostfreiem Stahl, Aluminium, einer Aluminiumlegierung, Kupfer oder Titan besteht, das mit den Kernschichtlagen 11 und 12 diffusionsverbindbar ist, wird zweckmäßig vor dem Walzen das Heizelement 30 derselben Wärmevorbehandlung unterzogen wie die Kernschichtlagen 11, 12 und 13 und die Deckschichten 14, 15. Bei dem Walzen gehen dann die erste und die zweite Kernschichtlage 11, 12 mit dem Rohr des Heizelements 30 eine Diffusionsverbindung ein. Das ermöglicht dann einen optimalen Wärmeübergang zwischen dem Heizelement 30 und dem übrigen Teil des Verbundmetallgegenstandes 10. Die Erfahrung hat gezeigt, dass sich, wenn das Heizelement 30, das nicht wärmevorbehandelt ist, zwischen die wärmevorbehandelten, das heißt erhitzten Kernschichtlagen 11 und 12 eingeschoben und das Gesamtgebilde anschließend gewalzt wird, eine für einen guten Wärmeübergang zwischen dem Heizelement 30 und den umgebenden Kernschichtlagen 11, 12 ausreichend enge Verbindung ergibt. Diese Verbindung lässt sich aber, wie gesagt, durch passende Wärmevorbehandlung, das heißt durch Erhitzen des als Rohrheizkörper ausgebildeten Heizelements 30 optimieren.

### Bezugszeichenliste

- 10: Verbundmetallgegenstand
- 11: erste Kernschichtlage
- 12: zweite Kernschichtlage
- 13: dritte Kernschichtlage
- 14: Deckschicht
- 15: Deckschicht
- 16: Kanal
- 18: Aussparung
- 19: Kreuzungspunkt
- 20: Kernschicht
- 22: Aluminiumheizplatte
- 24: Aluminiumkühlplatte
- 26: Mittelebene
- 30: Heizelement
- 32: Temperatursensor
- 34: Metallband
- 36: oberer Haltekamm
- 38: unterer Haltekamm
- 40: Walzenspalt
- 42: Walze
- 44: Walze

## Patentansprüche

1. Verfahren zum Herstellen eines Verbundmetallgegenstands (10) aus einer wenigstens zweilagigen Kernschicht (20) aus Aluminium oder einer Aluminiumlegierung und zwei Deckschichten (14, 15) aus Metall durch
a) Anordnen von wenigstens einem Heizelement (30) zwischen einer ersten und einer zweiten Kernschichtlage (11, 12),
b) Wärmevorbehandeln der Kernschichtlagen (11, 12) und der Deckschichten (14, 15) bei einer Temperatur, die über der Rekristallisationstemperatur des Aluminiums oder der Aluminiumlegierung, aber unterhalb des Schmelzpunktes des Aluminiums ist,
c) anschließend Zusammenpressen der Kernschichtlagen (11, 12) und der Deckschichten durch Walzen, um das oder jedes Heizelement (30) in die beiden Kernschichtlagen (11, 12) einzubetten und eine Dickenreduktion wenigstens der Kernschichtlagen (11, 12) zu bewirken, wobei zumindest die Deckschichten (14, 15) und die Kernschichtlagen (11, 12) im Bereich ihrer miteinander in Berührung kommenden Seiten eine gegenseitige Diffusionsverbindung eingehen und dadurch stoffschlüssig zu dem herzustellenden Verbundmetallgegenstand (10) miteinander verbunden werden,
d) **dadurch gekennzeichnet, dass** eine dritte Kernschichtlage (13) aus Aluminium oder einer Aluminiumlegierung, die einen Kanal (16) für Kühlfluid aufweist, mit der ersten und der zweiten Kernschichtlage (11, 12) angeordnet ist, und gemeinsam die Wärmevorbehandlung erfährt und gewalzt wird; und dadurch mit diesen (11, 12) und einer (15) der Deckschichten diffusionsverbunden wird und dass die Dickenreduktion aller Kernschichtlagen (11, 12, 23) in Bezug auf deren vor dem Walzen vorhandene Gesamtdicke bis zu 25 % beträgt.

2. Verfahren nach Anspruch 1, **dadurch gekennzeichnet, dass**, wenn im Grundriss des Verbundmetallgegenstands (10) Kreuzungspunkte (19) zwischen dem Heizelement (30) und dem Kanal (16) entstehen, die zweite Kernschichtlage (12), die der dritten Kernschichtlage (13) benachbart ist, vorab im Bereich des Kanals (16) ausgespart wird.

3. Verfahren nach einem der vorhergehenden Ansprüche, **dadurch gekennzeichnet, dass** ein Heizelement (30) eingesetzt wird, dessen Dicke oder Durchmesser gleich einer gemeinsamen Dicke der ersten und der zweiten Kernschichtlage (11, 12) nach erfolgter Dickenreduktion ist.

4. Verfahren nach einem der vorhergehenden Ansprüche, **dadurch gekennzeichnet, dass** die dritte Kernschichtlage (13) eine Dicke hat, die vor und nach der Dickenreduktion gleich der jeweiligen gemeinsamen Dicke der ersten und der zweiten Kernschichtlage (11, 12) ist.

5. Verfahren nach einem der vorhergehenden Ansprüche, **dadurch gekennzeichnet, dass** als Kanal in der dritten Kernschichtlage (13) ein Kanal (16) eingesetzt wird, der die dritte Kernschichtlage (13) auf ihrer gesamten Dicke durchsetzt.

6. Verfahren nach einem der vorhergehenden Ansprüche, **dadurch gekennzeichnet, dass** die drei Kernschichtlagen (11, 12, 13) und die beiden Deckschichten (14, 15) einem Walzenspalt (40) jeweils in einem spitzen Winkel zueinander zugeführt werden.

7. Verfahren nach einem der Ansprüche 1 bis 5, **dadurch gekennzeichnet, dass** die drei Kernschichtlagen (11, 12, 13) und die beiden Deckschichten (14, 15) einem Walzenspalt (40) jeweils im Wesentlichen parallel zueinander zugeführt werden.

8. Verfahren nach einem der vorhergehenden Ansprüche, **dadurch gekennzeichnet, dass** das Walzen in zwei Schritten ausgeführt wird, wobei in dem ersten Schritt insgesamt eine Dickenreduktion aller Kernschichtlagen (11, 12, 13) von bis zu 5 Prozent und in dem zweiten Schritt eine zusätzliche Dickenreduktion aller Kernschichtlagen von bis zu 20 Prozent erzeugt wird.

9. Verfahren nach einem der vorhergehenden Ansprüche, **dadurch gekennzeichnet, dass** in dem Schritt b) das Heizelement (39) dieselbe Wärmevorbehandlung erfährt wie die Kernschichtlagen (11, 12, 13) und die Deckschichten (14, 15).

## Claims

1. A method of manufacturing a composite metal article (10) from an at least dual layer aluminum or aluminum alloy core layer (20) and two metal cover layers (14, 15), by
a) arranging at least one heating element (30) between a first and a second core layer tier (11, 12),
b) thermal pretreating of the core layer tiers (11, 12) and the cover layers (14, 15) with a temperature higher than the recrystallisation temperature of the aluminum or the aluminum alloy, but lower than the melting point of the aluminum,
c) subsequent pressing of the core layer tiers (11, 12) and the cover layers by rolling in order to embed the one or each heating element (30) into both core layer tiers (11, 12) and for reducing the thickness of the core layer tiers (11, 12), wherein at least the cover layers (14, 15) and the core layer tiers (11, 12) undergo a diffusion connection in a region in which their faces come into contact, whereby they are connected in metallic continuity in order to form the composite metal article (10) to be manufactured,
d) **characterized in that** a third aluminum or aluminum alloy core layer tier (13) is arranged with the first and the second core layer tiers (11, 12) and commonly thermally pretreated and rolled, the third core layer tier having a channel (16) for a cooling fluid; and
thereby being diffusion connected with the first and the second core layer tiers (11, 12) and one (15) of the cover layers, the thickness reduction of all core layer tiers (11, 12, 23) relative to the total thickness before rolling being 25 %.

2. The method according to claim 1, **characterized in that**, when in a layout of the composite metal article (10) crossing points (19) between the heating element (30) and the channel (16) are generated, the second core layer tier (12), adjacent to the third core layer tier (13), is previously recessed in a region of the channel (16).

3. The method according to any of the preceding claims, **characterized in that** a heating element (30) is used, a thickness or diameter of which is equal to a common thickness of the first and the second core layer tiers (11, 12) after thickness reduction.

4. The method according to any of the preceding claims, **characterized in that** the third core layer tier (13) has a thickness that is equal to the respective common thickness of the first and the second core layer tiers (11, 12) before and after thickness reduction.

5. The method according to any of the preceding claims, **characterized in that** as a channel in the third core layer tier (13) a channel (16) is used that penetrates the third core layer tier (13) in its complete thickness.

6. The method according to any of the preceding claims, **characterized in that** the three core layer tiers (11, 12, 13) and both cover layers (14, 15) are arranged in an acute angle to each other when they are fed to a roll gap (40).

7. The method according to any of claims 1 to 5, **characterized in that** the three core layer tiers (11, 12, 13) and both cover layers (14, 15) are essentially parallel to each other when they are fed to a roll gap (40).

8. The method according to any of the preceding claims, **characterized in that** the rolling is performed in two steps wherein in the first step a total thickness reduction of all core layer tiers (11, 12, 13) of up to 5 percent is generated, and in a second step an additional thickness reduction of all core layer tiers of up to 20 percent is generated.

9. The method according to any of the preceding claims, **characterized in that** in step b) the heating element (39) is thermally pretreated identical to the core layer tiers (11, 12, 13) and the cover layers (14, 15).

## Revendications

1. Procédé de production d'un objet en métal composite (10) en une couche cetrale au moins double (20) en aluminium ou en alliage d'aluminium et deux couches supérieures (14, 15) en métal par
a) arrangement d'au moins un élément chauffant (30) entre une première et une deuxième couches centrales (11, 12),
b) traitement thermique préliminaire des couches centrales (11, 12) et des couches supérieures (14,15) à une température qui se situe au-dessus de la température de recristallisation de l'aluminium ou de l'alliage en aluminium, mais en dessous du point de fusion de l'aluminium,
c) compression enfin des couches centrales (11, 12) et des couches supérieures par des rouleaux afin d'intégrer le ou chaque élément chauffant (30) dans les deux couches centrales (11, 12) et de provoquer une réduction de l'épaisseur d'au moins les couches centrales (11, 12), les couches supérieures (14, 15) et les couches centrales (11, 12) établissant une liaison mutuelle par diffusion dans la zone de leur côtés venant en contact et les reliant entre elles par coopération de matière à l'objet en métal composite (10) à produire,
d) **caractérisé en ce qu'**une troisième couche centrale (13) en aluminium ou en un alliage d'aluminium, qui présente un canal (16) pour le liquide de refroidissement, est disposée avec la première et la deuxième couches centrales (11, 12) et est soumise en commun au traitement thermique préliminaire et au compactage devenant ainsi avec elles (11, 12) et une (15) des couches supérieures une liaison par diffusion, et **en ce que** l'épaisseur de toutes les couches centrales (11, 12, 23) est réduite jusqu'à 25 % par rapport à leur épaisseur totale existante avant les rouleaux.

2. Procédé selon la revendication 1, **caractérisé en ce que** si des points de croisement (19) apparaissent dans la projection horizontale de l'objet en métal composite (10) entre l'élément chauffant (30) et le canal (16), la deuxième couche centrale (12) située à côté de la troisième couche centrale (13) est évidée au préalable dans la zone du canal (16).

3. Procédé selon l'une des revendications précédentes, **caractérisé en ce qu'**un élément chauffant (30) est inséré, élément dont l'épaisseur ou le diamètre est égal à une épaisseur de la première et de la deuxième couches centrales (11, 12) une fois la réduction de l'épaisseur réussie.

4. Procédé selon l'une des revendications précédentes, **caractérisé en ce que** la troisième couche centrale (13) présente une épaisseur qui est égale à l'épaisseur respective commune de la première et la deuxième couches centrales (11, 12) avant et après la réduction d'épaisseur.

5. Procédé selon l'une des revendications précédentes, **caractérisé en ce qu'**un canal (16) traversant toute l'épaisseur de la troisième couche centrale (13) est inséré comme canal dans la troisième couche centrale (13).

6. Procédé selon l'une des revendications précédentes, **caractérisé en ce que** les trois couches centrales (11, 12, 13) et les deux couches supérieures (14, 15) sont amenées les unes par rapport aux autres respectivement en un angle aigu par une ligne de contact (40).

7. Procédé selon l'une quelconque des revendications 1 à 5, **caractérisé en ce que** les trois couches centrales (11, 12, 13) et les deux couches supérieures (14, 15) sont amenées essentiellement en parallèle les unes par rapport aux autres respectivement par une ligne de contact (40).

8. Procédé selon l'une des revendications précédentes, **caractérisé en ce que** le compactage est effectué en deux étapes, la première consistant à réduire l'épaisseur de toutes les couches centrales (11, 12, 13) jusqu'à 5 pour cent et la deuxième étape à réduire davantage l'épaisseur de toutes les couches centrales jusqu'à 20 pour cent.

9. Procédé selon l'une des revendications précédentes, caractérisé en ce pendant l'étape b) l'élément chauffant (39) est soumis au même traitement thermique préliminaire que les couches centrales (11, 12, 13) et les couches supérieures (14, 15).
